# EUROPÄISCHE PATENTSCHRIFT

(11) **EP 4 227 652 B1**
(45) Veröffentlichungstag und Bekanntmachung des Hinweises auf die Patenterteilung: **02.04.2025**
(21) Anmeldenummer: 23156881.7
(22) Anmeldetag: 15.02.2023
(51) Int. Cl.: G01G 17/04, G01G 21/22

(54) **FLASCHENWAAGE**
BOTTLE WEIGHER
BALANCE POUR BOUTEILLES

(30) Priorität: 15.02.2022 DE 102022103557
(43) Veröffentlichungstag der Anmeldung: 16.08.2023
(73) Patentinhaber: Testo SE & Co. KGaA, 79822 Titisee-Neustadt (DE)
(72) Erfinder: GÖPFERT, Dirk, 79241 Ihringen (DE); DERR, Andreas, 78166 Donaueschingen (DE)
(74) Vertreter: Mertzlufft-Paufler, Cornelius

(56) Entgegenhaltungen:
- CN-U- 208 383 263
- DE-B4- 102008 040 740
- DE-U1- 202008 001 293

## Beschreibung

Die Erfindung beschreibt eine Flaschenwaage, mit einem Oberteil, an welchem eine Aufstellfläche für ein zu wägendes Gut ausgebildet ist, und einem Unterteil, an welchem wenigstens ein Standfuß ausgebildet ist, wobei eine Gewichtsbestimmung durch eine Positionsveränderung zwischen dem Oberteil und dem Unterteil erfolgt.

Solche Waagen werden beispielsweise benutzt, um Flaschen, beispielsweise Kältemittel- oder Gasflaschen, zu wiegen. Dies erfolgt beispielsweise im Feld, also etwa bei der Anlieferung und nicht in einem kontrollierten Umfeld. Dabei kann es beispielsweise durch Steine am Boden oder andere Unebenheiten zu Messfehlern kommen.

Die DE 10 2008 040740 B4 beschreibt eine Küchenmaschine mit einem Basisteil, an welchem eine Mehrzahl N von Füßen zum Aufstellen der Küchenmaschine auf einem Untergrund angeordnet sind, und einer Wägeeinrichtung, wobei die Wägeeinrichtung eine Anzahl M mit 0 < M < N von Wägemodulen aufweist, dadurch gekennzeichnet, dass zur Bestimmung eines in einem auf dem Basisteil aufgestellten Gewichts der Schwerpunkt des zu bestimmenden Gewichts in mehrere Schwerpunktkomponenten unterteilt ist, und wobei der Schwerpunkt des zu bestimmenden Gewichts in eine Schwerpunktkomponente der Küchenmaschine, eine konstante Schwerpunktkomponente des mit der Küchenmaschine zuzubereitenden Zubereitungsguts und eine dynamische Schwerpunktkomponente unterteilt ist.

Die DE 20 2008 001293 U1 beschreibt eine Vorrichtung zur Kontrolle der Flüssigkeitsentnahme aus einem Flüssigkeitsbehälter zur Überwachung der Flüssigkeitsaufnahme eines Lebewesens über einen Zeitraum, mit
- einer Messvorrichtung zur Messung der im Flüssigkeitsbehälter befindlichen Flüssigkeitsmenge,
- einer Zeiterfassungsvorrichtung,
- einem Datenspeicher mit gespeicherten Sollwerten, die jeweils eine Flüssigkeitsmenge repräsentieren,
- einer Auswertevorrichtung, die Istwerte ermittelt, die die entnommene Flüssigkeit über definierte Zeitintervalle repräsentieren, und diese mit den Sollwerten vergleicht,
- einer Signalvorrichtung zur Anzeige des Ergebnisses aus dem Vergleich der Istwerte mit den Sollwerten.

Die CN 208 383 263 U beschreibt eine Wiegevorrichtung für Flüssiggasflaschen.

Die Aufgabe der Erfindung ist es eine Flaschenwaage zu schaffen, die eine einfachere Handhabung, insbesondere im Feld, aufweist.

Diese Aufgabe wird durch eine Flaschenwaage mit den kennzeichnenden Merkmalen des Anspruchs 1 gelöst.

Demnach ist die erfindungsgemäße Flaschenwaage dadurch gekennzeichnet, dass die Aufstellfläche kleiner als eine durch den wenigstens einen Standfuß definierte Standfläche ist. Auf diese Weise können beispielsweise schwere Flaschen (ca. 100kg) auf die Waage gerollt werden, statt sie unter großer Kraftanstrengung auf die Waage zu heben.

Beim Rollen der Flasche auf die Waage kommt die Flasche zuerst mit der seitlichen Kante der Waage in Kontakt.

Dadurch dass die Standfläche größer als die Auflagefläche ist, liegen die Auflagefüßchen vor dieser Kante. Ein Kraftvektor, der durch die Flasche auf die Kante wirkt, wird dabei von den Standfüßen aufgenommen, wodurch der Stand der Waage zusätzlich stabilisiert wird. Ein Kippen oder Verrutschen der Waage wird dadurch sicher verhindert.

Erfindungsgemäß sind wenigstens vier Standfüße ausgebildet, wobei jeder Standfuß einen eigenen Gewichtssensor hat. Auf diese Weise kann ein sicherer Stand gewährleistet sein.

Erfindungsgemäß ist die Standfläche durch eine geradlinige Verbindung von äußeren Begrenzungen benachbarter Standfüße gebildet. Dadurch entsteht im Wesentlichen eine rechteckige oder quadratische Kontur, die eine sichere Standfläche definiert.

Erfindungsgemäß liegt eine senkrechte Projektion der Aufstellfläche auf die Standfläche entlang der vollen Kontur innerhalb der Standfläche. Insbesondere wobei ein Mindestabstand zwischen einem Rand der Standfläche und einem Rand der Aufstellfläche eingehalten ist. Auf diese Weise ist eine einfache Handhabung der Waage möglich, da eine Flasche, wie oben beschrieben, an mehreren Stellen aufgerollt werden kann, ohne dass eine Kippgefahr besteht.

In einer Ausführung ist das Unterteil in seitlicher Richtung wenigstens so groß wie das Oberteil, insbesondere wobei an dem Unterteil ein vorzugsweise von einer durch den wenigstens einen Standfuß definierten Lage eines Bodens beabstandetes Konturelement ausgebildet ist, welches eine Kontur des Oberteils in einer bestimmten Höhe nachbildet. Auf diese Weise kann das Risiko, dass das Oberteil auf einer Bodenunebenheit aufliegen kann, minimiert oder beseitigt werden. Dies ist insbesondere beim Einsatz im Freien hilfreich, da dort keine ausreichende Bodenfreiheit sichergestellt ist und Steinchen oder andere Gegenstände am Oberteil anliegen und somit das Messergebnis beeinflussen können. Steine oder Unebenheiten können somit nicht mehr die Oberseite berühren und eine Wiegebewegung behindern.

Bei der erfindungsgemäßen Ausführung liegen Steinchen und Gegenstände stattdessen an dem Konturelement an, das beispielsweise als Rippe oder vorstehende Kante ausgebildet sein kann. Zusätzlich wird durch das Konturelement der Einsatz in unbefestigtem Gelände verbessert. So ist es möglich, dass selbst beim Einsinken der Auflagefüßchen in weichen Boden, durch das Konturelement der Kontakt zum Oberteil verhindert wird und somit Fehlmessungen vermieden werden.

In einer Ausführung ist an dem Oberteil zumindest in einem Segment zwischen zwei benachbarten Standfüßen eine vorzugsweise konzentrische kreissegmentförmige Kontur gebildet. Auf diese Weise ist es einfacher, eine Flasche auf der Auflagefläche zentriert auszurichten.

Dadurch ist es beispielsweise trotz einseitigem Blickwinkel möglich zu erkennen, ob die eine Flasche zentrisch positioniert ist, da konzentrische Abweichungen zu den Kreisformen auf der Waage deutlicher auffallen. Beim Heben einer schweren Flasche auf die Waage ist dies besonders hilfreich, da bei dieser Bewegung der Blickwinkel einseitig ist und ein bei marktüblichen Waagen nachträgliches Zentrieren durch Verschieben der Flasche notwendig wird. Hingegen kann bei der erfindungsgemäßen Ausführung eine Flasche bereits bei der Aufsetzbewegung sicher zentriert werden.

In einer Ausführung ist an dem Oberteil, insbesondere durch die kreissegmentförmige Kontur, ein Tragegriff ausgebildet. Auf diese Weise ist ein einfacher Transport der Waage möglich, beispielsweise ohne Transportkoffer.

In einer Ausführung ist zwischen wenigstens zwei benachbarten Standfüßen eine seitliche Stufe, insbesondere Abschrägung, in dem Oberteil angeordnet. Diese Stufe ist insbesondere zur Aufstellfläche hin ausgerichtet. Auf diese Weise kann insbesondere das Rollen einer Flasche auf die Waage vereinfacht sein. Darüber hinaus verringert die Stufe oder die Schräge den Kraftvektor senkrecht auf den Boden, so dass eine Kippgefahr der Waage zusätzlich verringert ist.

In einer Ausführung ist das Unterteil und/oder das Oberteil zwischen wenigstens zwei benachbarten Standfüßen konkav ausgebildet. Dadurch kann einerseits erreicht werden, dass die Auflagefläche zumindest zwischen den Standfüßen kleiner ist als die Standfläche. Zum anderen kann dadurch eine Stufe oder Schrägung in diesem konkaven Bereich liegen wodurch ein Rollen einer Flasche vereinfacht wird.

In einer Ausführung ist eine Auswerteelektronik im Oberteil angeordnet. Auf diese Weise kann das Unterteil möglichst niedrig ausgebildet sein, wodurch die Standfestigkeit zusätzlich erhöht werden kann.

Die Erfindung umfasst auch die Verwendung einer Flaschenwaage, insbesondere nach einem der vorangehenden Ansprüche, zum Wägen einer fluidhaltigen Flasche, dadurch gekennzeichnet, dass die Flasche in zentrischer Aufstellung eine Aufstellfläche an wenigstens zwei, insbesondere an vier, Seiten seitlich überragt.

Die Erfindung ist nachfolgend anhand eines Ausführungsbeispiels mit Bezug auf die beiliegenden Zeichnungen näher erläutert.

Es zeigt:
- Fig. 1:: eine Schrägansicht einer erfindungsgemäßen Waage,
- Fig. 2:: eine Unteransicht der Waage der Fig. 1,
- Fig. 3:: eine Seitenansicht der Waage der Fig. 1,
- Fig. 4:: eine Detailvergrößerung der Fig. 4,
- Fig. 5:: eine Draufsicht der Waage der Fig. 1 mit eingezeichneten Kreisen, und
- Fig. 6:: die Draufsicht der Waage der Fig. 1 mit eingezeichneter Auflagefläche und Standfläche.

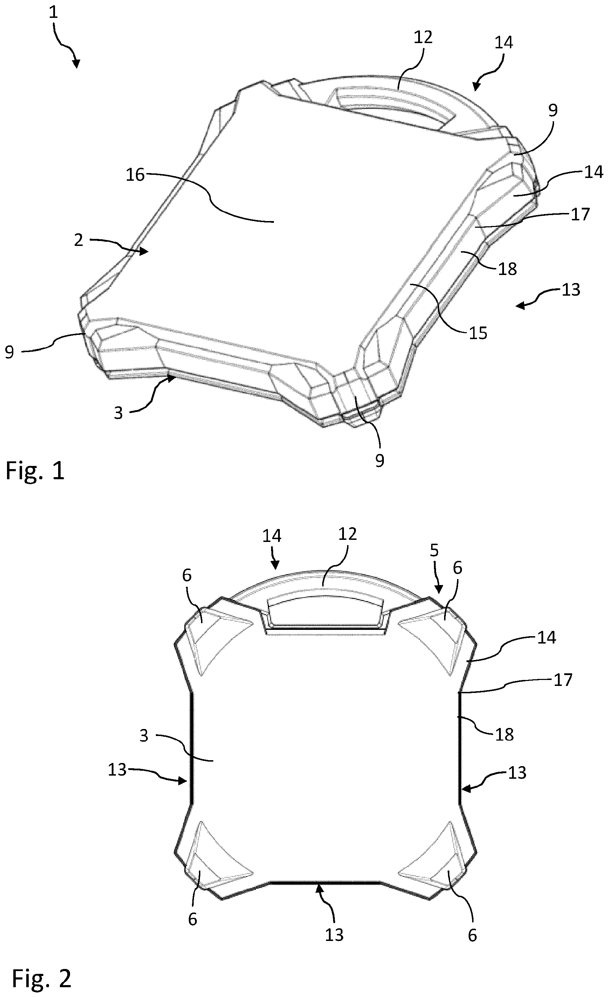

Die Fig. 1 zeigt eine erfindungsgemäße Flaschenwaage 1 mit einem Oberteil 2 und einem Unterteil 3. Das Oberteil 2 weist eine Auflagefläche 4 auf, auf das ein Wägegut, insbesondere eine Flasche, abstellbar ist.

Das Oberteil 2 und Unterteil 3 sind relativ zueinander senkrecht zur Auflagefläche 4 beweglich. Über die Auslenkung oder Relativbewegung ist eine Bestimmung der Gewichtskraft des Wägeguts möglich.

Eine Waageelektronik (nicht gezeigt) ist im Oberteil 2 angeordnet. Auf diese Weise kann das Unterteil 3 sehr flach ausgebildet sein.

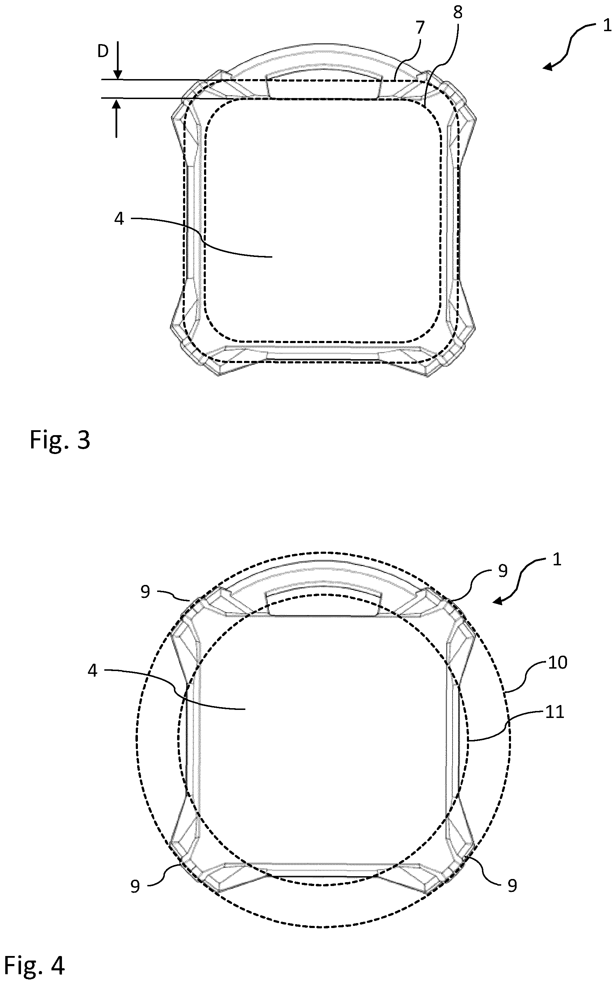

Die Fig. 2 zeigt eine Unteransicht der Flaschenwaage 1. Die Flaschenwaage 1 besitzt im Beispiel vier Standfüße 5, deren geradlinige Verbindung ihrer äußeren Begrenzungen die Standfläche 6 der Flaschenwaage 1 definieren. In Fig. 3 ist die Standfläche 6 gegenüber der Projektion der Auflagefläche 4 gezeigt. Die Kontur 7 der Standfläche 6 weist zur Kontur 8 der Auflagefläche 4 einen Abstand D auf, der im Beispiel über den Umfang der Kontur nahezu konstant ist. Insgesamt kann es vorteilhaft sein, wenn der Abstand D einen Mindestabstand aufweist, der unter anderem von den Abständen zwischen den Standfüßen und/oder der Höhe der Waage abhängen kann. Beispielsweise kann der Abstand D zwischen 1 cm und 2cm betragen.

Eine Kontaktstelle oder -fläche zwischen einer Flasche, die auf die Waage gerollt werden soll, und der Auflagefläche 4 liegt dadurch immer innerhalb der Kontur 7 der Standfläche 6. Dadurch wird verhindert, dass die Flaschenwaage 1 kippt, wenn beispielsweise eine Flasche nicht exakt zentriert auf der Auflagefläche 4 steht oder während eine Flasche auf die Flaschenwaage 1 gerollt wird.

Die Standfüße 5 weisen nach Außen eine kreissegmentförmige Kontur 9 auf und sind so angeordnet, dass diese Kreissegmente 9 einen ersten Kreis 10 bilden, wie in Fig. 4 gezeigt. Zwischen den Standfüßen 5 ist die Flaschenwaage 1 an drei Seiten 13 konkav ausgebildet. Im Beispiel sind die konkaven Seiten 13 durch eine gerade Seite 18 gebildet, die durch Schrägen 14 jeweils mit benachbarten Standfüßen 5 verbunden ist.

Die Ecken 17 zwischen den Schrägen 14 und den geraden Seiten 18 bilden zusammen einen zweiten Kreis 11, der konzentrisch innerhalb des ersten Kreises 10 liegt. Die beiden Kreise 10 und 11 sind dadurch deutlich an der Flaschenwaage 1 zu erkennen und vereinfachen eine Zentrierung einer runden Flasche auf der Auflagefläche 4.

Dadurch ist es möglich, trotz einseitigem Blickwinkel zu erkennen, ob eine runde Flasche zentrisch positioniert auf der Flaschenwaage 1 angeordnet ist, da konzentrische Abweichungen zu den Kreisformen 10, 11 auf der Flaschenwaage 1 deutlicher auffallen, als zu eckigen Strukturen. Beim Heben einer schweren Flasche auf die Flaschenwaage 1 ist dies besonders hilfreich, da bei dieser Bewegung der Blickwinkel einseitig ist und ein bei marktüblichen Waagen nachträgliches Zentrieren durch Verschieben der Flasche notwendig wird. Hingegen kann bei der erfindungsgemäßen Ausführung eine Flasche bereits bei der Aufsetzbewegung sicher zentriert werden.

Die Flaschenwaage 1 weist an der nicht-konkaven Seite 14 einen Tragegriff 12 auf, der zwischen zwei benachbarten Standfüßen 5 konvex ausgebildet ist und im Wesentlichen entlang des ersten Kreises 10 verläuft. Der Tragegriff 12 ermöglicht eine einfache Aufnahme und einen einfachen Transport der Flaschenwaage 1, auch ohne zusätzlichen Transportkoffer.

Insgesamt ergibt sich durch die Anordnung der Standfüße 5 eine X-förmige Ausprägung der Flaschenwaage 1. Dies ermöglicht eine deutlich größere Auflagefläche 4 und führt somit - trotz kleiner Bauweise - zu einem sehr stabilen Stand. Dies ist insbesondere bei schweren Flaschen und unebenem Gelände sehr zum Vorteil.

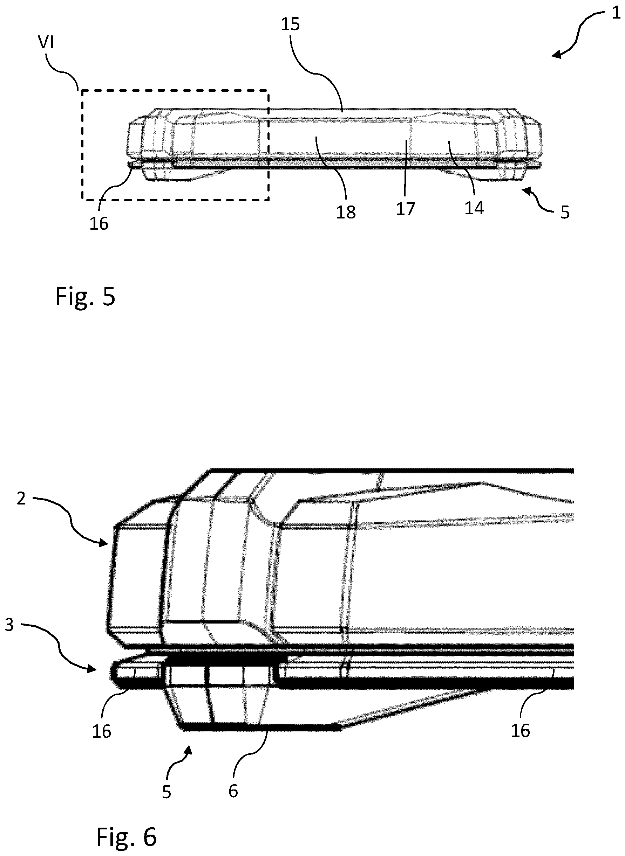

Die Fig. 5 zeigt eine Seitenansicht der Flaschenwaage 1. Die Oberseite 2 der Flaschenwaage 1 weist jeweils an den konkaven Seiten 13 zur Auflagefläche 4 hin eine Abschrägung 15 oder Stufe auf. Dadurch verkleinert sich die Hürde zum Rollen einer Flasche auf die Waage.

Die Unterseite 3 der Flaschenwaage 1 weist ein vom Boden beabstandetes Konturelement 16 auf, welches eine Kontur des Oberteils 2 in einer bestimmten Höhe nachbildet. Das Konturelement 16 weist die Form einer Kante oder Rippe auf, wie in Fig. 6 im Detail gezeigt ist.

Das Konturelement 16 minimiert das Risiko, dass das Oberteil auf einer Bodenunebenheit aufliegen kann. Dies ist insbesondere beim Einsatz im Freien hilfreich, da dort keine ausreichende Bodenfreiheit sichergestellt ist und Steinchen oder andere Gegenstände am Oberteil 2 anliegen, und somit das Messergebnis beeinflussen können. Bei der erfindungsgemäßen Ausführung liegen Steinchen und Gegenstände an diesem Konturelement 16 an. So wird der Kontakt von Steinen oder Unebenheiten zum Oberteil 2 und somit die Beeinflussung vom Messergebnis verhindert. Zusätzlich wird durch das Konturelement der Einsatz in unbefestigtem Gelände verbessert. So ist es möglich, dass selbst bei Einsinken der Auflagefüßchen in weichen Boden über das Konturelement der Kontakt zum Oberteil 2 verhindert wird, und somit Fehlmessungen vermieden werden.

### Bezugszeichenliste

- 1: Waage
- 2: Oberteil
- 3: Unterteil
- 4: Auflagefläche
- 5: Standfuß
- 6: Standfläche
- 7: Kontur der Standfläche
- 8: Kontur der Auflagefläche
- 9: Kreissegmente
- 10: erster Kreis
- 11: zweiter Kreis
- 12: Tragegriff
- 14: Schräge
- 15: Abschrägung
- 16: Konturelement
- 17: Ecke
- 18: gerade Seite

## Patentansprüche

1. Flaschenwaage, mit einem Oberteil (2), an welchem eine Aufstellfläche (4) für ein zu wägendes Gut ausgebildet ist, und einem Unterteil (3), an welchem wenigstens ein Standfuß (5) ausgebildet ist, wobei eine Gewichtsbestimmung durch eine Positionsveränderung zwischen dem Oberteil (2) und dem Unterteil (3) erfolgt, **dadurch gekennzeichnet, dass** an dem Unterteil wenigstens vier Standfüße (5) ausgebildet sind, wobei eine Standfläche durch eine geradlinige Verbindung von äußeren Begrenzungen benachbarter Standfüße gebildet ist, wobei jeder Standfuß (5) einen eigenen Gewichtssensor hat, und dass eine senkrechte Projektion der Aufstellfläche auf die Standfläche entlang der vollen Kontur innerhalb der Standfläche liegt.

2. Flaschenwaage nach Anspruch 1, **dadurch gekennzeichnet, dass** das Unterteil (3) in seitlicher Richtung wenigstens so groß ist wie das Oberteil (2), insbesondere wobei an dem Unterteil (3) ein vorzugsweise von einer durch den wenigstens einen Standfuß definierten Lage eines Bodens beabstandetes Konturelement (16) ausgebildet ist, welches eine Kontur des Oberteils (2) in einer bestimmten Höhe nachbildet.

3. Flaschenwaage nach einem der vorangehenden Ansprüche, **dadurch gekennzeichnet, dass** an dem Oberteil (2) zumindest in einem Segment zwischen zwei benachbarten Standfüßen (5) eine vorzugsweise konzentrische kreissegmentförmige Kontur (10, 11) gebildet ist und/oder dass das Unterteil (3) und/oder das Oberteil (2) zwischen wenigstens zwei benachbarten Standfüßen (5) konkav ausgebildet ist.

4. Flaschenwaage nach einem der vorangehenden Ansprüche, **dadurch gekennzeichnet, dass** an dem Oberteil (2), insbesondere durch die kreissegmentförmige Kontur (10), ein Tragegriff (12) ausgebildet ist.

5. Flaschenwaage nach einem der vorangehenden Ansprüche, **dadurch gekennzeichnet, dass** zwischen wenigstens zwei benachbarten Standfüßen (5) seine seitliche Stufe, insbesondere Abschrägung (15), in dem Oberteil (2) angeordnet ist.

6. Flaschenwaage nach einem der vorangehenden Ansprüche, **dadurch gekennzeichnet, dass** eine Auswerteelektronik im Oberteil (2) angeordnet ist.

7. Verwendung einer Flaschenwaage nach einem der vorangehenden Ansprüche, zum Wägen einer fluidhaltigen Flasche, **dadurch gekennzeichnet, dass** die Flasche in zentrischer Aufstellung eine Aufstellfläche an wenigstens zwei, insbesondere an vier, Seiten seitlich überragt.

## Claims

1. Bottle scale, having an upper part (2) on which a standing surface (4) for an item to be weighed is formed, and having a lower part (3) on which at least one standing foot (5) is formed, wherein a change in position between the upper part (2) and the lower part (3) is used to determine the weight, characterized at least four standing feet (5) are formed on the lower part, wherein a footprint is formed by a straight line connecting outer boundaries of adjacent feet, wherein each standing foot (5) has its own weight sensor, and in that a perpendicular projection of the standing surface onto the footprint lies along the full contour within the footprint.

2. Bottle scale according to claim 1, **characterized in that** the lower part (3) is at least as large in the lateral direction as the upper part (2), in particular wherein a contoured element (16) is formed on the lower part (3), preferably at a distance from a position of a base defined by the at least one standing foot, which element simulates a contour of the upper part (2) at a specific height.

3. Bottle scale according to one of the preceding claims, **characterized in that** a preferably concentric, circular-segment-shaped contour (10, 11) is formed on the upper part (2), at least in one segment between two adjacent feet (5), and/or **in that** the lower part (3) and/or the upper part (2) is/are designed to be concave between at least two adjacent standing feet (5).

4. Bottle scale according to one of the preceding claims, **characterized in that** a carrying handle (12) is formed on the top part (2), in particular by means of the circular-segment-shaped contour (10).

5. Bottle scale according to one of the preceding claims, **characterized in that** its lateral step, in particular bevel (15), is arranged in the upper part (2) between at least two adjacent standing feet (5).

6. Bottle scale according to one of the preceding claims, **characterized in that** an electronic evaluation system is arranged in the upper part (2).

7. Use of a bottle scale according to one of the preceding claims, for weighing a bottle containing a fluid, **characterized in that** the bottle, when placed centrally, laterally projects beyond a standing surface on at least two, in particular on four, sides.

## Revendications

1. Balance pour bouteilles, avec une partie supérieure (2), sur laquelle est formée une surface de pose (4) pour un produit à peser, et une partie inférieure (3), sur laquelle est formé au moins un pied (5), une détermination du poids s'effectuant par un changement de position entre la partie supérieure (2) et la partie inférieure (3), **caractérisée en ce qu'**au moins quatre pieds (5) sont formés sur la partie inférieure, une surface d'appui étant formée par une liaison rectiligne de limites extérieures de pieds voisins, chaque pied (5) ayant son propre capteur de poids, et **en ce qu'**une projection perpendiculaire de la surface de pose sur la surface d'appui se trouve le long du contour complet à l'intérieur de la surface d'appui.

2. Balance pour bouteilles selon la revendication 1, **caractérisée en ce que** la partie inférieure (3) est au moins aussi grande en direction latérale que la partie supérieure (2), en particulier un élément de contour (16), de préférence espacé d'une position d'un fond définie par l'au moins un pied, étant formé sur la partie inférieure (3) et reproduisant un contour de la partie supérieure (2) à une hauteur déterminée.

3. Balance pour bouteilles selon l'une des revendications précédentes, **caractérisée en ce qu'**un contour (10, 11) de préférence concentrique en forme de segment de cercle est formé sur la partie supérieure (2) au moins dans un segment entre deux pieds (5) voisins et/ou **en ce que** la partie inférieure (3) et/ou la partie supérieure (2) est réalisée de manière concave entre au moins deux pieds (5) voisins.

4. Balance pour bouteilles selon l'une des revendications précédentes, **caractérisée en ce qu'**une poignée de transport (12) est formée sur la partie supérieure (2), en particulier par le contour (10) en forme de segment de cercle.

5. Balance pour bouteilles selon l'une des revendications précédentes, **caractérisée en ce qu'**une marche latérale, en particulier une pente, est disposé dans la partie supérieure (2) entre au moins deux pieds (5) voisins.

6. Balance pour bouteilles selon l'une des revendications précédentes, **caractérisée en ce qu'**un système électronique d'évaluation est disposé dans la partie supérieure (2).

7. Utilisation d'une balance pour bouteilles selon l'une des revendications précédentes, pour peser une bouteille contenant un fluide, **caractérisée en ce que** la bouteille, en position centrée, dépasse latéralement d'une surface de pose sur au moins deux, en particulier sur quatre, côtés.
